# EUROPÄISCHE PATENTSCHRIFT

(11) **EP 0 405 513 B1**
(45) Veröffentlichungstag und Bekanntmachung des Hinweises auf die Patenterteilung: **10.05.1995**
(21) Anmeldenummer: 90112277.0
(22) Anmeldetag: 27.06.1990
(51) Int. Cl.: G01N 21/47, G01N 33/48

(54) **Gerät zur remissions-photometrischen Analyse von Flüssigkeitsproben**
Device for photometrical analysis by remission of liquid samples
Dispositif pour l'analyse photométrique par rémission d'échantillons liquides

(30) Priorität: 29.06.1989 DE 3921391
(43) Veröffentlichungstag der Anmeldung: 02.01.1991
(73) Patentinhaber: BOEHRINGER MANNHEIM GMBH, 68305 Mannheim (DE)
(72) Erfinder: Markart, Ernst, D-8000 München 60 (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 037 484
- EP-A- 0 129 220
- EP-A- 0 183 524
- WO-A-83/00926
- GB-A- 2 096 314

## Beschreibung

Die Erfindung betrifft ein Gerät zur remissions-photometrischen Analyse von Flüssigkeitsproben, insbesondere Körperflüssigkeiten, die jeweils auf ein Testfeld eines in das Gerät einführbaren Teststreifens aufgebracht werden, mit einer Streifenaufnahme zur Positionierung des in das Gerät eingeführten Teststreifens.

Ein solches Gerät ist zur Auswertung von Teststreifen bekannt, wie sie in dem US-Patent 4 476 149 beschrieben werden.

Die Teststreifen enthalten dabei Informationen. die für die Durchführung der Messungen und insbesondere die korrekte Auswertung der gemessenen Remissionswerte durch das Gerät erforderlich sind. Diese Information ist in Form eines Barcodes auf den Teststreifen aufgebracht, wobei der Barcode in Einschubrichtung der Teststreifen gelesen wird, d.h., daß die einzeinen Balken des Barcodes quer zur Einschubrichtung bzw. zur Längsrichtung des Teststreifens verlaufen.

Erfindungsgemäß werden bei einem solchen Gerät die Merkmale des Anspruch 1 vorgeschlagen.

Diese Anordnung bietet die Möglichkeit. bei hoher Informationsdichte unterschiedliche Barcodeformen zu lesen. Bei einer ersten Ausführungsform kann der Barcode Balken unterschiedlicher Breite besitzen. Auf diese Weise lassen sich durch die Auswertung der Meßergebnisse der beiden Leseeinheiten zwei Zustände ermitteln. Entweder sehen beide Leseeinheiten denselben Wert oder sie sehen einen unterschiedlichen Wert, entsprechend den Bit-Werten 0 und 1. Diese Ausführungsform hat den Vorzug, daß die Balken des Barcodes in beliebiger Länge gedruckt werden können. Man hat auf diese Weise die Möglichkeit, Trägerbahnen herzustellen, auf die der Barcode aufgedruckt wird. Von diesen Trägerbahnen können durch Schritte quer zur Längsrichtung der Druckbalken des Barcodes Streifen abgeschnitten werden.

Dadurch, daß die Leseeinheiten quer zur Einschubrichtung nebeneinander angeordnet sind, besteht auch die Möglichkeit, zwei Barcodespuren vorzusehen, von denen die eine als Datenspur mit Balken einheitlicher Breite und die andere als Taktspur dient. Diese Anordnung erlaubt eine gegenüber der vorstehend beschriebenen Ausführungsform annähernd doppelt so große Informationsdichte und eignet sich insbesondere für die Speicherung,von großen Informationsmengen auf geringem Raum. Ein Anwendungsbeispiel wird weiter unten noch erläutert.

Um die Sicherheit zu erhöhen, ob der Teststreifen seine vorgeschriebene Lage innerhalb des Gerätes eingenommen hat und einhält, kann der Teststreifen eine Markierung an einer Stelle tragen, die bei vollständig eingeführtem und eingerastetem Teststreifen gegenüber den Leseeinheiten liegt, so daß diese gleichzeitig eine Endlagenkontrolle des Streifens durchführen können.

Den Meßgeräten der vorstehend beschriebenen Art ist üblicherweise mindestens eine Referenzkurve eingegeben, welche eine Beziehung zwischen den gemessenen Remissionswerten und den daraus ableitbaren gesuchten Analysewerten oder medizinisch aussagekräftigen Werten angibt. Eine solche Referenzkurve stellt beispielsweise die Beziehung zwischen Remissionswerten und einer bestimmten Substanzkonzentration in der untersuchten Flüssigkeit her. Nun liegt diese Referenzkurze im allgemeinen nicht fest, sondern hängt vor allem von der Pflege des Gerätes (Verschmutzung der Meßeinrichtung) und auch von der Herstellung der Teststreifen ab. Im allgemeinen sind die Teststreifen einer Charge im Rahmen der möglichen Meßgenauigkeit identisch, nicht jedoch die Teststreifen unterschiedlicher Chargen. Daher ist es erforderlich, zumindest beim Chargenwechsel mit Hilfe eines Prüfstreifens definierten Remissionsvermögens eine Prüfmessung durchzuführen, wobei bisher den Geräten ein Prüfstreifen beigegeben wurde. Dieser Prüfstreifen hat den Nachteil, daß sein Prüffeld mit der Zeit unweigerlich verschmutzt oder auf andere Weise sein Remissionsvermögen ändert. Außerdem kann dieser einmalige Prüfstreifen die herstellungsbedingten Unterschiede zwischen Teststreifen unterschiedlicher Chargen nicht berücksichtigen.

Bevorzugt wird daher ein Prüfstreifen vorgeschlagen, der auf einer beim Einschieben des Prüfstreifens an den Leseeinheiten vorbeigeführten Spur eine das Remissionsvermögen zu den gesuchten Meßwerten in Beziehung setzende Referenzinformation trägt. Beim Einführen des Prüfstreifens in das Gerät wird dem Gerät nunmehr eine Referenzkurve mitgegeben, für die der angegebene Remissionswert des Prüffeldes tatsächlich gemessen wurde. Wenn also beispielsweise das Prüffeld einen Remissionswert von 50% aufweist und dieser Wert nach den Angaben des Teststreifenherstellers einer bestimmten Substanzkonzentration entspricht, so kann nunmehr das Meßgerät daraufhin überprüft werden, ob es auch den angegebenen Konzentrationswert mit dem Prüfstreifen anzeigt. Bei Abweichung kann ein bestimmter Faktor ermittelt werden, mit dem dann die späteren Testresultate korrigiert werden müssen. Dieser Prüfstreifen kann nun bei jeder Charge von Teststreifen mit hergestellt werden und auch eine Chargeninformation tragen, so daß das Gerät nur dann eine Messung durchführt, wenn vor der Messung von Teststreifen der Prüfstreifen derselben Charge gemessen wurde.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
Fig. 1 einen schematischen Teilschnitt durch ein erfindungsgemäßes Gerät im Bereich der Streifenaufnahme.
Fig. 2 eine schematische Draufsicht auf die Teststreifenauflage innerhalb des Gerätes.
Fig. 3 eine schematische Erläuterung zur Arbeitsweise der Barcode-Leseeinrichtung für eine erste Art des Codes,
Fig. 4 eine schematische Erläuterung der Barcode-Leseeinrichtung für einen Barcode gemäß einer zweiten Ausführungsform.
Fig. 5 die schematische Darstellung eines Teststreifens und
Fig. 6 die schematische Darstellung eines Prüfstreifens.

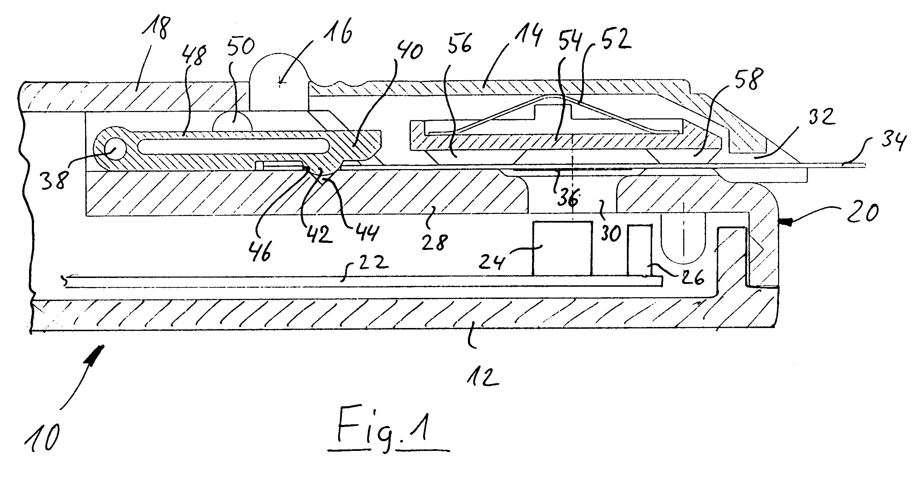

In Figur 1 ist mit 10 ein Teil eines Meßgerätes zur remissionsphotometrischen Analyse von Flüssigkeiten bezeichnet, wobei von dem Gerät lediglich ein Teil des Bodens 12 und ein Klappdeckel 14 zu erkennen sind, der um eine Achse 16 schwenkbar an der Deckfläche 18 des Gerätes angelenkt ist. In dem Gerät erkennt man eine nach dem Aufklappen des Deckels 14 herausnehmbare Streifenauflage 20 sowie eine zwischen derselben und dem Boden 12 angeordnete Schaltungsplatine 22, welche eine optische Meßeinrichtung (Sende-Empfangseinrichtung) 24 sowie eine Barcode-Leseeinrichtung (26) trägt. Alle anderen Elemente der Schaltungsplatine sich der Einfachheit halber weggelassen.

In einer Streifenauflagefläche 28 der Streifenaufnahme 20 ist ein Meßfenster 30 ausgebildet. In die Streifenaufnahme 20 ist durch einen Schlitz 32 des Deckels 14 ein Teststreifen 34 einschiebbar, der ein Testfeld 36 trägt. Am inneren Ende der Streifenaufnahme ist um eine Achse 38 ein Hebel 40 angelenkt, der mit seinem freien Ende zum Schlitz 32 hinweist und nahe diesem freien Ende einen halbkugelförmigen Rastvorsprung 42 trägt, der zum Eingriff in eine in der Streifenauflagefläche 28 ausgebildete Vertiefung 44 bestimmt ist. Der Teststreifen 34 weist nahe seinem im eingeschobenen Zustand inneren Ende eine Aussparung 46 auf, in welche der Rastvorsprung einrastet, wenn sich der Teststreifen 34 in seiner für die Messung gewünschten Lage befindet, in der das Testfeld 36 genau über dem Meßfenster 30 liegt. Der Hebel 40 wird in seine Raststellung vorgespannt. Die Vorspannung erfolgt durch einen elastisch verformbaren Steg 48 des aus Kunststoff bestehenden Hebels 40, der im eingeschobenen Zustand der Streifenaufnahme 20 über einen halbkugelförmigen Nippel 50 an der Innenseite der Deckfläche 18 anliegt, so daß er bei einer Auslenkung des Hebels 40 aus seiner Raststellung elastisch verformt wird.

An der Innenseite des Deckels ist mittels einer Feder 52 ein Druckstück 54 befestigt, das mit beiderseits des Meßfensters 30 gelegenen Druckflächen 56, 58 den Teststreifen beiderseits des Meßfensters 30 flach gegen die Streifenauflagefläche 28 andrückt. Dadurch wird sichergestellt, daß das Testfeld des eingeschobenen Teststreifens flach über dem Meßfenster liegt. Auch wenn der Teststreifen beispielsweise etwas gewölbt ist oder beim Einschieben in das Gerät verbogen wird, wird somit ein flaches Aufliegen des Testfeldes auf dem Meßfenster gewährleistet.

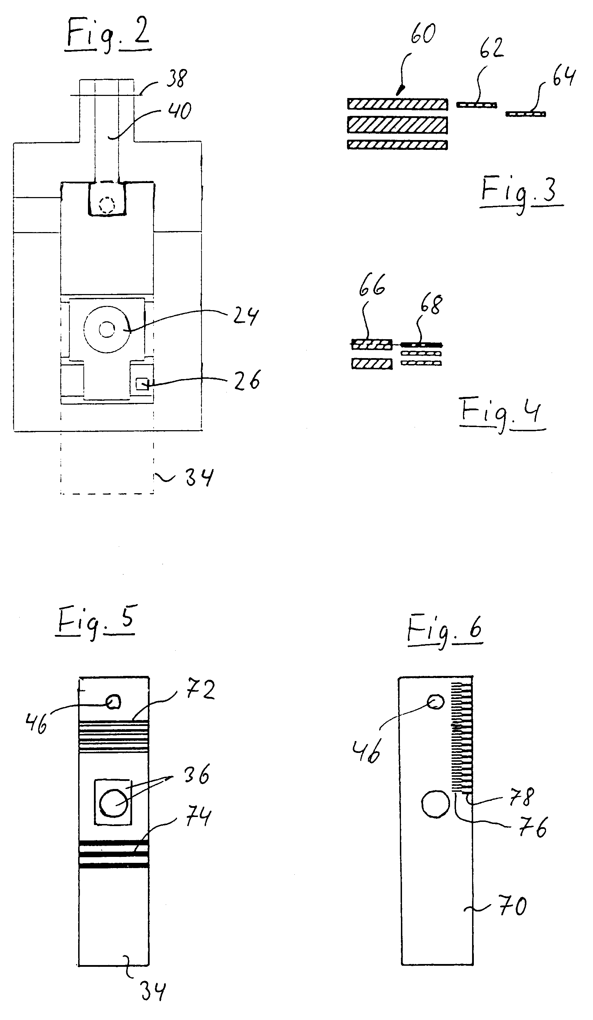

Wie Figur 2 zeigt, ist der Codeleser 26 am Rande der Streifenauflagefläche 28 angeordnet. Er umfaßt zwei Leseeinheiten, die beispielsweise durch Blenden oder auch durch entsprechend geformte Halbleiterempfangselemente definiert werden können. In Figur 3 erkennt man eine Datenspur, die auf einem Teststreifen (Figur 5) angeordnet sein kann. Die Datenspur besteht aus Balken unterschiedlicher Breite. Rechts neben der Datenspur 60 sind zwei Leseeinheiten 62, 64 angeordnet, die parallel zu der durch den Pfeil A bezeichneten Einschubrichtung des Teststreifens 34 gegeneinander versetzt sind. Das Maß der Versetzung ist eine Informationseinheit, so daß die Leseeinheiten 62, 64 dann, wenn die Datenspur 60 an ihnen vorbeigleitet, entweder beide einen schwarzen Balken erkennen (mittlerer Balken) oder Felder unterschiedlicher Helligkeit (wie im dargestellten Ausführungsbeispiel). Das Lesen erfolgt dabei so, daß die Auslösung eines Signals an der Leseeinheit 62 durch eine Helligkeitsänderung das Lesen an der Leseeinheit 64 triggert. So kann man beispielsweise definieren, daß der Wert 0 vorliegt, wenn beide Leseeinheiten dieselbe Helligkeit erkennen und daß der Wert 1 vorliegt, wenn die Leseeinheiten 62 und 64 unterschiedliche Helligkeit feststellen. Die Wahl dieses Barcodes hat den Vorzug, daß die Balken in beliebiger Länge gedrückt werden können. Dies ist insbesondere zweckmäßig beim Bedrucken von Teststreifen, die alle identisch sind. Sie können dann durch Abschneiden von einer beliebig langen Materialbahn erzeugt werden.

In Figur 4 dagegen ist ein anderes Codiersystem dargestellt. Es umfaßt eine Datenspur 66, die aus Balken gleicher Breite besteht. Ferner ist eine Taktspur 68 vorgesehen deren Felder jeweils in Abständen von einer Informationseinheit angeordnet sind, wobei ein Balken und ein Zwischenraum gleicher Breite jeweils eine Informationseinheit darstellen. Dieses Codiersystem kann mit derselben Anordnung von Leseeinheiten gelesen werden, wobei die von der einen Leseeinheit gelesene Taktspur das Lesen der Datenspur durch die andere Leseeinheit triggert. Dieses System hat den Vorzug, daß es in der Datenspur eine gegenüber dem System gemäß Figur 3 annähernd doppelt so hohe Datendichte hat. Der Nachteil dagegen besteht darin, daß es auf jeden Streifen einzeln aufgedruckt werden muß.

Im praktischen Beispiel wird daher das in Figur 3 dargestellte Codiersystem für Teststreifen nach Art des in Figur 5 ausgebildeten Teststreifens 34 verwendet, während das Codiersystem gemäß Figur 4 für einen Prüfstreifen 70 gemäß Figur 6 benutzt wird der eine wesentlich größere Datenmenge tragen soll. Bei dem Teststreifen gemäß Figur 5 enthält die Datenspur 72 die für die Testmessung erforderlichen Informationen. Die Spur 74 dient dagegen als Endlagenanzeige, wobei im Prinzip ein Streifen genügen kann. Bei dem Prüfstreifen gemäß Figur 6 ist mit 76 die Taktspur und mit 78 die Datenspur bezeichnet die beispielsweise eine Referenzkurve für die beabsichtigte Messung sowie eine Chargeninformation enthalten kann.

Nachzutragen ist, daß mit der beschriebenen Leseinrichtung die Datenspuren statisch und unabhängig von der Einschubgeschwindigkeit der Streifen gelesen werden können.

## Patentansprüche

1. Gerät zur remissions-photometrischen Analyse von Flüssigkeitsproben, insbesondere Körperflüssigkeiten, die jeweils auf ein Testfeld (36) eines in das Gerät (10) einführbaren Teststreifens (34) aufgebracht werden, mit einer Teststreifenaufnahme (20) und einer an der Teststreifenaufnahme (20) angeordneten Barcode-Lesevorrichtung (26),
**dadurch gekennzeichnet,** daß
die Barcode-Lesevorrichtung (26) zum Lesen von Barcodes zweier unterschiedlicher Codiersysteme mit unterschiedlichen Barcodeformen zwei Leseeinheiten (62,64) aufweist, die quer zur Einschubrichtung nebeneinander und parallel zur Einschubrichtung gegeneinander versetzt sind, wobei
die Teststreifen (34) mit einem ersten Codiersystem versehen sind, dessen Barcode aus Balken (72) unterschiedlicher Breite besteht und
das zweite Codiersystem auf Prüfstreifen (70) aufgebracht ist, deren Barcode eine Taktspur (76) und eine Datenspur (78) einschließt, wobei die von der einen Leseeinheit (64) gelesene Taktspur (76) das Lesen der Datenspur (78) mit der anderen Leseeinheit (62) triggert.

2. Gerät nach Anspruch 1, **dadurch gekennzeichnet,** daß die Taktspur (76) des Codiersystems der Prüfstreifen (70) aus jeweils in Abständen von einer Informationseinheit angeordneten Feldern besteht, wobei ein Balken und ein Zwischenraum gleicher Breite des Barcodes jeweils eine Informationseinheit darstellen.

3. Gerät nach Anspruch 1 oder 2, **dadurch gekennzeichnet**, daß das Codiersystem der Prüfstreifen (70) eine das Remissionsvermögen zu den gesuchten Meßwerten in Beziehung setzende Referenzinformation trägt.

4. Gerät nach einem der vorhergehenden Ansprüche mit einem in einer Streifenauflagefläche (28) ausgebildeten Meßfenster (30), **dadurch gekennzeichnet**, daß es ein Streifenandruckelement (54) aufweist, das in Richtung auf die Streifenauflagefläche (28) elastisch auslenkbar vorgespannt ist und -in Einschubrichtung des Teststreifens (34) betrachtet- vor und hinter dem Meßfenster (30) jeweils eine an der Streifenauflagefläche (28) bzw. dem Teststreifen (34) anliegende Druckfläche (56,58) aufweist.

## Claims

1. Device for photometric analysis by remission of liquid samples, in particular of body fluids which are applied in each case onto a test field (36) of a test strip (34) that is capable of being inserted into the device (10), with a test-strip support (20) and a bar-code reading device (26) arranged on the test-strip support (20),
characterised in that
the bar-code reading device (26) for reading bar codes pertaining to two different coding systems having different forms of bar code exhibits two read units (62, 64) which are offset alongside one another transverse to the direction of insertion and mutually offset parallel to the direction of insertion, wherein
the test strips (34) are provided with a first coding system, the bar code of which consists of bars (72) of varying width and
the second coding system is applied to check strips (70), the bar code of which includes a clock track (76) and a data track (78), wherein the clock track (76) read by the one read unit (64) triggers the reading of the data track (78) by the other read unit (62).

2. Device according to Claim 1, characterised in that the clock track (76) of the coding system of the check strips (70) consists of fields which in each case are arranged at intervals of an information unit, wherein in each case a bar and a space of the same width pertaining to the bar code represent an information unit.

3. Device according to Claim 1 or 2, characterised in that the coding system of the check strips (70) carries reference information relating the remission capacity to the measured values being sought.

4. Device according to one of the preceding claims with a measuring window (30) formed in a strip-support surface (28), characterised in that it exhibits a strip-pressure element (54) which is prestressed so as to be capable of being elastically deflected in the direction of the strip-support surface (28) and - viewed in the direction of insertion of the test strip (34) - exhibits, in front of and behind the measuring window (30), a pressure surface (56, 58) in close contact with the strip-support surface (28) and the test strip (34) respectively.

## Revendications

1. Dispositif pour l'analyse photométrique par rémission d'échantillons liquides, en particulier de liquides du corps, qui sont placées à chaque fois sur un champ d'essai (36) d'une bande de test (34) pouvant être introduite dans l'appareil (10), muni d'un logement de bande de test (20) et d'un dispositif de lecture de code barres (26) disposé sur le logement de bande de test (20), caractérisé en ce que le dispositif de lecture du code barres (26), pour lire les codes barres de deux systèmes de codage différents munis de différentes formes de codes barres, présente deux unités de lecture (62, 64) qui sont décalées l'une à côté de l'autre, perpendiculairement au sens d'introduction, et l'une par rapport à l'autre, parallèlement au sens d'introduction, les bandes de test (34) étant munies d'un premier système de codage dont le code barres se compose de barres (72) de différentes largeurs et d'un second système de codage placé sur des bandes de contrôle (70) dont le code barres inclut une voie d'entraînement (76) et une piste de données (78), la voie d'entraînement (76) lue par l'une des unités de lecture (64) déclenchant la lecture de la piste de données (78) avec l'autre unité de lecture (62).

2. Dispositif salon la revendication 1, caractérisé en ce que la voie d'entraînement (76) du système de codage des bandes de contrôle (70) se compose de champs disposés à chaque fois avec des écartements par rapport à une unité d'information, une barre du code barres et un espace intermédiaire de même largeur représentant à chaque fois une unité d'information.

3. Dispositif selon les revendications 1 ou 2, caractérisé en ce que le système de codage des bandes de contrôle (70) porte une information de référence qui met la capacité de rémission en rapport avec les valeurs de mesure recherchées.

4. Dispositif selon l'une des revendications précédentes, muni d'une fenêtre de mesure (30) conçue dans une surface d'appui de bande (28), caractérisé en ce que cette fenêtre présente un élément de serrage de de la bande, élément qui est précontraint en direction de la surface d'appui de la bande (28) et en pouvant être dévié de façon élastique, et qui, considéré dans le sens d'introduction de la bande de test (34), présente à chaque fois, devant et derrière la fenêtre de mesure (30), une surface de pression (56, 58) contigüe à la surface d'appui de la bande (28) ou à la bande de test (34).
